# EUROPÄISCHE PATENTSCHRIFT

(11) **EP 1 381 784 B1**
(45) Veröffentlichungstag und Bekanntmachung des Hinweises auf die Patenterteilung: **30.08.2006**
(21) Anmeldenummer: 02747271.1
(22) Anmeldetag: 11.04.2002
(51) Int. Cl.: F16B 31/02

(54) **SCHRAUBENMUTTER ZUR BEGRENZUNG EINES EINWIRKENDEN DREHMOMENTS UND DAZU KORRESPONDIERENDES VERFAHREN**
NUT FOR LIMITING AN EFFECTIVE TORQUE AND CORRESPONDING METHOD
ECROU PERMETTANT DE LIMITER UN COUPLE DE SERRAGE EFFECTIF ET PROCEDE CORRESPONDANT

(30) Priorität: 23.04.2001 DE 10119913
(43) Veröffentlichungstag der Anmeldung: 21.01.2004
(73) Patentinhaber: Newfrey LLC, Newark, Delaware 19711 (US)
(72) Erfinder: SCHNEIDER, Joachim, 35630 Ehringshausen (DE); DREXLER, Frank, 63683 Ortenberg (DE)
(74) Vertreter: Haar, Lucas Heinz Jörn
(86) Internationale Anmeldenummer: PCT/EP2002/004018
(87) Internationale Veröffentlichungsnummer: WO 2002/086336

(56) Entgegenhaltungen:
- WO-A-87/07928
- GB-A- 1 204 294
- GB-A- 1 252 834
- GB-A- 2 119 467
- GB-A- 2 153 948
- US-A- 5 713 705

## Beschreibung

Die vorliegende Erfindung betrifft eine Schraubenmutter zur Begrenzung eines einwirkenden Drehmoments und ein dazu korrespondierendes Verfahren.

Schraubenmuttern sind als solche bekannt. Ihre Montage erfolgt zumeist manuell oder automatisiert mittels eines Drehmomentschlüssels, welcher ein einwirkendes Drehmoment mechanisch begrenzt. Das tatsächlich beaufschlagte Drehmoment ist einer montierten Schraubenmutter jedoch häufig nicht anzusehen.

Beispielsweise aus der FR 77 28 290 ist auch eine Schraubenmutter bekannt, welche eine geometrisch ausgebildete Sollbruchstelle aufweist. Eine solche Mutter kann jedoch nur richtig funktionieren, wenn das Aufschraubmoment von der Schlüsselfläche über die Sollbruchstelle auf das Gewinde im unteren Bereich übertragen wird. Bei der in der FR 77 28 290 vorgeschlagenen Mutter bleibt jedoch unklar, wie beispielsweise eine definierte Abscherung erfolgen soll, wenn im Falle einer starken Reibung im oberen Teil des Innengewindes, etwa bei einem in den Rohrabschnitt ragender Bolzen, die Sollbruchstelle gar nicht zum Tragen kommt, weil die Krafteinleitung eben nicht nur über diese Fuge sonder auch über das Bolzenende erfolgt.

Dieses Problem scheint die aus der GB 2 153 948 bekannte Schraubenmutter zu lösen. Sie weist jedoch insbesondere den Nachteil auf, dass sie gar nicht bzw. nur schwer und unter Beschädigung eines benachbart angeordneten Bauteils demontierbar ist.

Es ist Aufgabe der vorliegenden Erfindung, eine gegenüber den bekannten Stand der Technik verbesserte Schraubenmutter zur Begrenzung eines einwirkenden Drehmoments sowie ein dazu korrespondierendes Verfahren anzugeben.

Erfindungsgemäß wird diese Zielsetzung durch eine Schraubenmutter mit den Merkmalen gemäß Anspruch 1 und durch ein Verfahren zur Begrenzung eines einwirkendes Drehmoments mit den Merkmalen des Anspruchs 15 gelöst. Vorteilhafte Weiterbildungen und Ausgestaltungen, welche einzeln oder in Kombination miteinander eingesetzt werden können, sind Gegenstand der jeweiligen Unteransprüche.

Die erfindungsgemäße Schraubenmutter zur Begrenzung eines einwirkenden Drehmoments weist einen Gewindeabschnitt und einen Rohrabschnitt auf, wobei zwischen Gewindeabschnitt und Rohrabschnitt eine Sollbruchstelle angeordnet ist, und wobei der Gewindeabschnitt eine erste Ansatzstruktur für einen Werkzeugschlüssel und der Rohrabschnitt eine zweite Ansatzstruktur für einen weiteren Werkzeugschlüssel aufweisen. Als geeignetes Werkzeug kommt im einfachsten Fall ein Maulschlüssel oder vergleichbares Außenwerkzeug in Betracht.

Eine solche Schraubenmutter vermeidet in vorteilhafter Weise die eingangs genannten Nachteile. So ist einerseits an der montierten Schraubenmutter ein tatsächlich aufgegebenes definiertes Drehmoment anhand des abgescherten Rohrabschnittes sichtbar, letzterer sichert in vorteilhafter Weise wegen des fehlenden Kraft- bzw. Reibschlusses eine ausschließliche Kraftübertragung über die Sollbruchstelle auf den Gewindeabschnitt, dessen erste Ansatzstruktur in vorteilhafter Weise eine einfache Demontage zu einem beliebigen Zeitpunkt ermöglicht.

Erfindungsgemäß bevorzugt weist die Sollbruchstelle einen Außendurchmesser auf, welcher sowohl kleiner als der Außendurchmesser des Gewindeabschnitts als auch kleiner als der Außendurchmesser des Rohrabschnitts ist. Das genaue Abmaß einer solchen Freimachung bzw. Einschnürung bzw. Fuge erlaubt die definierte Übertragung eines bestimmten maximalen Drehmomentes. Variiert man das geometrischen Abmaß jeweils für eine Schraubenmutter eines bestimmten Einsatzbereiches, so ist in vorteilhafter Weise mit einfachen Mitteln die Herstellung beliebiger Schraubenmuttern mit einer jeweils vordefinierten Drehmomentbegrenzung möglich.

Das eingangs genannte Problem, dass bei einer starken Reibung im oberen Teil des Innengewindes, etwa bei einem in den Rohrabschnitt ragender Bolzen, die Sollbruchstelle gar nicht zum Tragen kommt, weil die Krafteinleitung eben nicht nur über diese Fuge sondern auch über das Bolzenende erfolgt, wird zusätzlich dadurch vermindert, wenn der Rohrabschnitt vorzugsweise dergestalt trichterförmig ausgebildet ist, dass er ausgehend von einem Außen- bzw. Nenndurchmesser eines Innengewindes des Gewindeabschnitts sich zu diesem in entgegengesetzter Richtung hin erweitert; also das genannte Bolzenende sicher so freigeben ist, dass die Krafteinleitung vorzugsweise ausschließlich über die Sollbruchstelle erfolgt.

Alternativ oder kumulativ kann der Rohrabschnitt auch zylinderförmig ausgebildet sein, wobei er bevorzugt einen größeren Durchmesser aufweist als der Außen- bzw. Nenndurchmesser des Innengewindes des Gewindeabschnitts. Beide Maßnahmen helfen die Reibung zwischen Schraubenmutter und einem etwaig zu langen Bolzen weiter bis vollständig zu verringern, so dass dem gewünschten Bruch der Schraubenmutter im Bereich der Sollbruchstelle bei einem definiert aufgebrachten Drehmoment nichts entgegensteht.

Beispielsweise zur Vereinfachung der Herstellung eines Formwerkzeuges für die Schraubenmutter wird vorgeschlagen, dass der Rohrabschnitt ebenfalls ein Innengewinde aufweist, wobei der Außen- bzw. Nenndurchmesser des Innengewindes des Rohrabschnitts größer ist als der Außen- bzw. Nenndurchmesser des Innengewindes des Gewindeabschnitts.

Ist der Montageraum der Schraubenmutter für ein Außenwerkzeug wie ein Maulschlüssel begrenzt, wird bevorzugt von Innenwerkzeugen wie Innensechskantschlüssel oder vergleichbare Werkzeuge gebrauch gemacht. Deshalb wird vorgeschlagen, dass im Rohrabschnitt eine dritte Ansatzstruktur für ein Innenwerkzeug ausgebildet ist, beispielsweise eine Struktur für besagten Innensechskant oder vergleichbares Werkzeug.

Die erste und die zweite Ansatzstruktur weisen bevorzugt in etwa gleiche Abmaße auf, wenn es allein um die Ausbildung eines möglichst einfachen und preiswerten Herstellungswerkzeuges für die Schraubenmutter geht.

Stehen jedoch definierte, womöglich sogar garantierte, Drehmomente im Mittelpunkt der Anwendung solcher Schraubenmuttern wird vorgeschlagen, dass die erste und die zweite Ansatzstruktur verschiedene, d.h. größere oder kleinere, Abmaße aufweisen, insbesondere von einander verschiedene, vorzugsweise nicht messbare bzw. vergleichbare, also inkommensurable, Polygone beschreiben. Dies ermöglicht in vorteilhafter Weise eine Qualitätskontrolle schon während der Montage, denn ein Monteur ist im Fall der notwendigen Demontage einer fehlerhaft angezogenen Schraubenmutter nicht in der Lage, eine solche Schraubenmutter einfach mittels des vorhandenen Werkzeugs über die erste Ansatzstruktur nachträglich und somit lediglich optisch korrekt anzuziehen. Vielmehr ist er gezwungen, sich ein geeignetes Reparaturwerkzeug zu besorgen, wobei ein solcher Betriebsablauf in vorteilhafter Weise sicherstellen kann, das die fehlerhaft angezogene Schraubenmutter auch wirklich demontiert und stattdessen eine neue Schraubenmutter im vorgegebenen Drehmomentbereich montiert wird.

Die Schraubenmutter kann aus einem Metall gefertigt sein. Erfindungsgemäß bevorzugt handelt es sich jedoch um ein Kunststoffteil, das vorzugsweise aus einem Polymer wie Polyamid besteht.

Zur Realisierung beliebiger Drehmomentbegrenzungen, insbesondere auch bei kleinen Schraubenmuttern wird vorgeschlagen, dass die Sollbruchstelle aus einem gegenüber dem Gewinde- und/oder dem Rohrabschnitt abweichenden, insbesondere weicheren, Material besteht. Dies hat zum Vorteil, dass nicht nur über die Geometrie sondern auch oder ausschließlich über Materialeigenschaften die gewünschte Drehmomentbegrenzung erzielbar ist. Gewindeabschnitt, Rohrabschnitt und/oder die Sollbruchstelle sind in diesem Fall vorzugsweise mittels der Zweikomponenten-Spritzgusstechnik aneinander angeformt.

Erfindungsgemäß bevorzugt ist das Innengewinde des Gewindeabschnitts als ein Tannenbaumgewinde ausgebildet. Ein solches Tannenbaumgewinde ist zudem vorzugsweise dann wenigstens teilweise auch im Bereich des Rohrabschnitts ausgebildet, wenn einerseits Schraubenmuttern mit einer möglichst niedrigen Bauhöhe, alternativ oder kumulativ wenigstens drei, vorzugsweise wenigstens vier, insbesondere wenigstens fünf Gewindegänge realisiert werden sollen, welche in vorteilhafter Weise gewünschte Drehmomentwerte wie auch Abzugswerte aushalten. Obgleich mit der Abscherung des Rohrabschnitts auch das Ende des Innengewindes regelmäßig deformiert wird, ist die etwaige Demontage einer solchen Schraubenmutter mit Tannenbaumgewinde durch einfaches Abdrehen erreichbar, weil ein Tannenbaumgewinde in vorteilhafter Weise selbstschneidend wirkt.

Das erfindungsgemäße Verfahren zur Begrenzung eines einwirkenden Drehmoments auf die erfindungsgemäße Schraubenmutter und zum Lösen dieser Mutter zeichnet sich dadurch aus, dass ein Außenwerkzeug an der zweiten Struktur oder ein Innenwerkzeug an der dritten Struktur so ansetzt, dass der Rohrabschnitt bei Einwirkung eines definierten Drehmoments im Bereich der entsprechend ausgebildeten Sollbruchstelle abschert, wobei zum Lösen ein Werkzeug an die erste Ansatzstruktur des Gewindeabschnitts ansetzt.

Zusätzliche Einzelheiten und weitere Vorteile werden nachfolgend anhand eines bevorzugten Ausführungsbeispiels einer Schraubenmutter sowie anhand der Zeichnungen beschrieben.

Es zeigen:
- Fig. 1: eine erfindungsgemäße Schraubenmutter mit einem trichterförmigen Rohrabschnitt in der Seitenansicht;
- Fig. 2: eine erfindungsgemäße Schraubenmutter mit einem zylindrischen Rohrab-schnitt in der Seitenansicht;
- Fig. 3: die Schraubenmutter nach Fig. 1 oder 2 in der Draufsicht mit einer ersten und einer zweiten Ansatzstruktur gleicher Abmaße; und
- Fig. 4: die Schraubenmutter nach Fig. 1 oder 2 in der Draufsicht mit einer ersten und einer zweiten Ansatzstruktur verschiedener Abmaße.

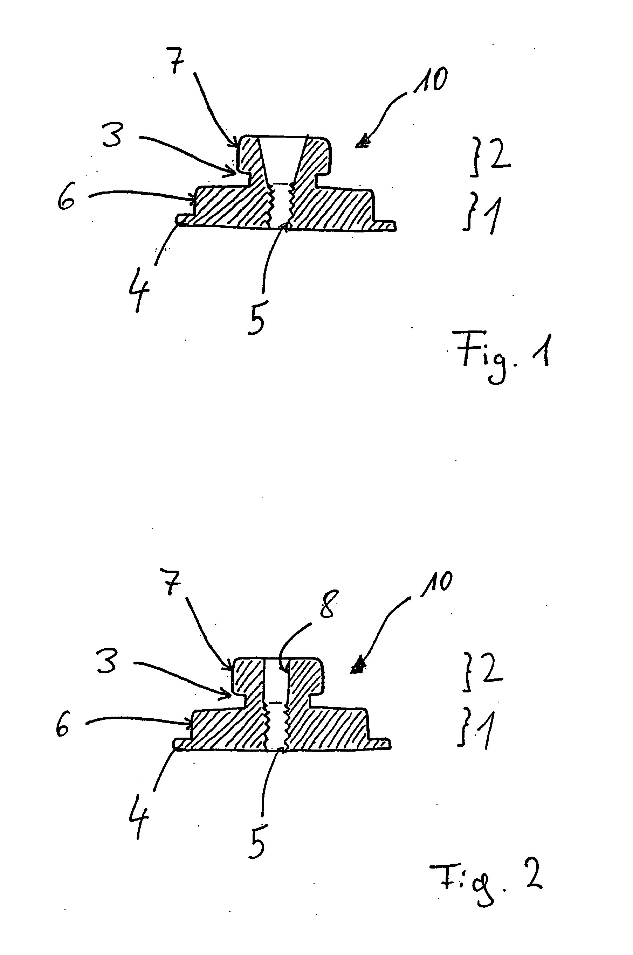

Fig. 1 zeigt eine erfindungsgemäße Schraubenmutter 10 zur Begrenzung eines einwirkenden Drehmoments mit einem Gewindeabschnitt 1 und einem trichterförmigen Rohrabschnitt 2 in der Seitenansicht. Zwischen Gewindeabschnitt 1 und Rohrabschnitt 2 ist eine Sollbruchstelle 3 angeordnet, welche als Freimachung bzw. Einschnürung ausgebildet ist. Mit anderen Worten weist die Sollbruchstelle 3 einen Außendurchmesser auf, welcher sowohl kleiner als der Außendurchmesser bzw. ein Außenabmaß des Gewindeabschnitts 1 als auch kleiner als der Außendurchmesser bzw. ein Außenabmaß des Rohrabschnitts 2 ist. Dieser kann beispielsweise dergestalt trichterförmig ausgebildet sein, dass er ausgehend von einem Außen- bzw. Nenndurchmesser eines Innengewindes 5 des Gewindeabschnitts 1 sich zu diesem entgegengesetzt erweitert.

Alternativ zu der in Fig. 1 dargestellten trichterförmigen Ausgestaltung des Rohrabschnitts 2 kann dieser erfindungsgemäß bevorzugt auch zylinderförmig ausgebildet sein, so wie dies in Fig. 2 dargestellt ist. Ein solchermaßen zylinderförmig ausgebildeter Rohrabschnitt 2 weist dabei vorzugsweise einen größeren Durchmesser auf als der Außen- bzw. Nenndurchmesser des Innengewindes 5 des Gewindeabschnitts 1.

Beide beschriebenen Ausgestaltungen (Trichter- oder Zylinderform) helfen mit in vorteilhafter Weise das eingangs beschriebene Problem zu minimieren, dass bei einer starken Reibung im oberen Teil des Innengewindes 5, etwa bei einem in den Rohrabschnitt 2 ragender Bolzen (nicht dargestellt), die Sollbruchstelle 3 gar nicht zum Tragen kommt, weil die Krafteinleitung eben nicht nur über diese Fuge sonder auch über das Bolzenende erfolgt.

Wie in Fig. 1 oder Fig. 2 erkennbar, weist zumindest der Rohrabschnitt 2 eine zweite Ansatzstruktur 7 für ein Werkzeug, im einfachsten Fall ein Maulschlüssel oder vergleichbares Außenwerkzeug, auf. Eine dritte Ansatzstruktur 8 für ein Innenwerkzeug ist vorzugsweise im Rohrabschnitt 2 ausgebildet, beispielsweise als ein Vier- oder Sechskant oder ähnlichem. Insbesondere zum Zwecke der Demontage einer montierten Schraubenmutter 10 weist diese im Bereich des Gewindeabschnitts 1 eine erste Ansatzstruktur 6 für ein weiteres Werkzeug, vorzugsweise wiederum ein Außenwerkzeug, auf.

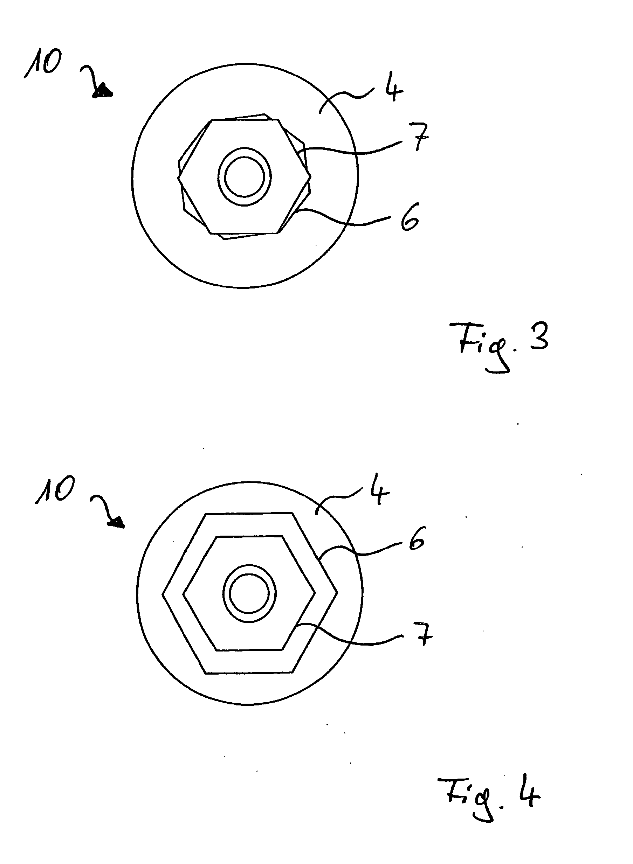

Fig. 3 zeigt die Schraubenmutter 10 nach Fig. 1 oder 2 in der Draufsicht mit einer ersten 6 und einer zweiten 7 Ansatzstruktur gleicher Abmaße. Ein fakultativ vorgesehener Flansch 4 verbessert beispielsweise in vorteilhafter Weise die Auflage oder Abdichtung eines Bauteils (nicht dargestellt) im Bereich der Schraubenmutter 10. Zudem verhindert eine solche Schraubenmutter 10, dass beispielsweise ein mit ihr zusammenwirkender Bolzen nicht aus einem Blech gerissen wird.

Erfindungsgemäß bevorzugt weist die Schraubenmutter 10 erste und zweite Ansatzstrukturen 6, 7 verschiedener Abmaße auf, so wie dies in Fig. 4 dargestellt ist. Demnach kann die erste Ansatzstruktur 6 beispielsweise ein größeres Abmaß als die zweite Ansatzstruktur 7 aufweisen, insbesondere - wie dargestellt - nicht vergleichbare, d.h. inkommensurable, Polygone.

Die erfindungsgemäße Schraubenmutter 10 besteht vorzugsweise aus einem Kunststoff, insbesondere aus einem Polymer wie Polyamid. Dies hat zum Vorteil, dass insbesondere der Bereich der Sollbruchstelle 3 aus einem gegenüber dem Gewinde- 1 und/oder dem Rohrabschnitt 2 abweichenden, insbesondere weicheren, Material bestehen kann, also eine definierte Drehmomentbegrenzung nicht nur über die Geometrie der Sollbruchstelle 3 sondern auch oder ausschließlich über gezielt verarbeitetes Material entsprechender Eigenschaft erreichbar ist.

### Bezugszeichenliste

- 1: Gewindeabschnitt
- 2: Rohrabschnitt
- 3: Sollbruchstelle
- 4: Flansch
- 5: Innengewinde
- 6: erste Ansatzstruktur
- 7: zweite Ansatzstruktur
- 8: dritte Ansatzstruktur

- 10: Schraubenmutter

## Patentansprüche

1. Schraubenmutter (10) zur Begrenzung eines einwirkenden Drehmoments mit einem Gewindeabschnitt (1) und einem Rohrabschnitt (2), wobei zwischen Gewindeabschnitt (1) und Rohrabschnitt (2) eine Sollbruchstelle (3) angeordnet ist, und wobei der Gewindeabschnitt (1) eine erste Ansatzstruktur (6) für einen ersten Werkzeugschlüssel und der Rohrabschnitt (2) eine zweite Ansatzstruktur (7) für einen weiteren Werkzeugschlüssel aufweist.

2. Schraubenmutter (10) nach Anspruch 1, **dadurch gekennzeichnet, dass** der Außendurchmesser der Sollbruchstelle (3) sowohl kleiner als der Außendurchmesser des Gewindeabschnitts (1) als auch kleiner als der Außendurchmesser des Rohrabschnitts (2) ist.

3. Schraubenmutter (10) nach Anspruch 1 oder 2, **dadurch gekennzeichnet, dass** der Rohrabschnitt (2) dergestalt trichterförmig ausgebildet ist, dass er ausgehend von einem Außen- bzw. Nenndurchmesser eines Innengewindes (5) des Gewindeabschnitts (1) sich zu diesem entgegengesetzt erweitert.

4. Schraubenmutter (10) nach Anspruch 1 oder 2, **dadurch gekennzeichnet, dass** der Rohrabschnitt (2) zylinderförmig ausgebildet ist und einen größeren Durchmesser aufweist als der Außen- bzw. Nenndurchmesser des Innengewindes (5) des Gewindeabschnitts (1).

5. Schraubenmutter (10) nach Anspruch 3 oder 4, **dadurch gekennzeichnet, dass** der Rohrabschnitt (2) ebenfalls ein Innengewinde aufweist, wobei der Außen- bzw. Nenndurchmesser des Innengewindes des Rohrabschnitts (2) größer ist als der Außen- bzw. Nenndurchmesser des Innengewindes (5) des Gewindeabschnitts (1).

6. Schraubenmutter (10) nach Anspruch 4, **dadurch gekennzeichnet, dass** im Rohrabschnitt (2) eine dritte Ansatzstruktur (8) für ein Innenwerkzeug ausgebildet ist, beispielsweise als ein Innensechskant oder ähnlichem.

7. Schraubenmutter (10) nach einem der Ansprüche 1 bis 6, **dadurch gekennzeichnet, dass** die erste und die zweite Ansatzstruktur (6, 7) in etwa gleiche Abmaße aufweisen.

8. Schraubenmutter (10) nach einem der Ansprüche 1 bis 6, **dadurch gekennzeichnet, dass** die erste und die zweite Ansatzstruktur (6, 7) verschiedene Abmaße aufweisen, insbesondere von einander verschiedene, vorzugsweise nicht vergleichbare, Polygone beschreiben.

9. Schraubenmutter (10) nach einem der vorherigen Ansprüche, **dadurch gekennzeichnet, dass** die Schraubenmutter (10) aus einem Kunststoff, vorzugsweise aus einem Polymer wie Polyamid, besteht.

10. Schraubenmutter (10) nach einem der vorherigen Ansprüche, **dadurch gekennzeichnet, dass** die Sollbruchstelle (3) aus einem gegenüber dem Gewinde- (1) und/oder dem Rohrabschnitt (2) abweichenden, insbesondere weicheren, Material besteht.

11. Schraubenmutter (10) nach Anspruch 9 oder 10, **dadurch gekennzeichnet, dass** der Gewindeabschnitt (1), der Rohrabschnitt (2) und/oder die Sollbruchstelle (3) mittels der Zweikomponenten-Spritzgusstechnik aneinander angeformt sind.

12. Schraubenmutter (10) nach einem der vorherigen Ansprüche, **dadurch gekennzeichnet, dass** das Innengewinde (5) des Gewindeabschnitt (1) als ein Tannenbaumgewinde (5) ausgebildet ist.

13. Schraubenmutter (10) nach Anspruch 12, **dadurch gekennzeichnet, dass** das Tannenbaumgewinde (5) wenigstens teilweise auch im Bereich des Rohrabschnittsbereich (2) ausgebildet ist.

14. Schraubenmutter (10) nach Anspruch 12 oder 13, **dadurch gekennzeichnet, dass** das Tannenbaumgewinde (5) wenigstens drei, vorzugsweise wenigstens vier, insbesondere wenigstens fünf Gewindegänge aufweist.

15. Verfahren zur Begrenzung eines einwirkenden Drehmoments auf eine Schraubenmutter (10) nach einem der vorherigen Ansprüche und zum Lösen dieser Schraubenmutter (10), bei dem ein Außenwerkzeug an der zweiten Struktur (7) oder ein Innenwerkzeug an der dritten Struktur (8) so ansetzt, dass der Rohrabschnitt (2) bei Einwirkung eines definierten Drehmoments im Bereich der Sollbruchstelle (3) abschert, wobei zum Lösen ein Werkzeug an die erste Ansatzstruktur (6) des Gewindeabschnitts (1) ansetzt.

## Claims

1. Screw nut (10) for limiting an acting torque, with a screw thread portion (1) and a tubular portion (2), a set breaking point (3) being arranged between screw thread portion (1) and tubular portion (2), and the screw thread portion (1) having a first lug structure (6) for a first key tool and the tubular portion (2) having a second lug structure (7) for a further key tool.

2. Screw nut (10) according to claim 1, **characterised in that** the external diameter of the set breaking point (3) is smaller than both the external diameter of the screw thread portion (1) and the external diameter of the tubular portion (2).

3. Screw nut (10) according to claim 1 or 2, **characterised in that** the tubular portion is funnel-shaped in design such that it widens starting from an external or nominal diameter of an internal screw thread (5) of the screw thread portion (1) counter thereto.

4. Screw nut (10) according to claim 1 or 2, **characterised in that** the tubular portion (2) is cylindrical and has a larger diameter than the external or nominal diameter of the internal screw thread (5) of the screw thread portion (1).

5. Screw nut (10) according to claim 3 or 4, **characterised in that** the tubular portion (2) also has an internal screw thread, the external or nominal diameter of the internal screw thread of the tubular portion (2) being greater than the external or nominal diameter of the internal screw thread (5) of the screw thread portion (1).

6. Screw nut (10) according to claim 4, **characterised in that** a third lug structure (8) for an internal tool is formed in the tubular portion (2), for example as a hexagon socket or similar.

7. Screw nut (10) according to one of claims 1 to 6, **characterised in that** the first and second lug structure (6, 7) have approximately the same dimensions.

8. Screw nut (10) according to one of claims 1 to 6, **characterised in that** the first and second lug structure (6, 7) have different dimensions, in particular, describe polygons which are different from one another and are preferably not comparable.

9. Screw nut (10) according to one of the preceding claims, **characterised in that** the screw nut (10) consists of a plastics material, preferably of a polymer such as polyamide.

10. Screw nut (10) according to one of the preceding claims, **characterised in that** the set breaking point (3) consists of a material different from, in particular softer than, the screw thread (1) and/or the tubular portion (2).

11. Screw nut (10) according to claim 9 or 10, **characterised in that** the screw thread portion (1), the tubular portion (2) and/or the set breaking point (3) are moulded on to one another by the two-component injection moulding technique.

12. Screw nut (10) according to one of the preceding claims, **characterised in that** the internal screw thread (5) of the screw thread portion (1) is designed as a fir tree thread (5).

13. Screw nut (10) according to claim 12, **characterised in that** the fir tree screw thread (5) is formed at least partially also in the region of the tubular portion region (2).

14. Screw nut (10) according to claim 12 or 13, **characterised in that** the fir tree screw thread (5) has at least three, preferably at least four, in particular at least five, threads.

15. Process for limiting an acting torque to a screw nut (10) according to one of the preceding claims, in which an external tool is applied to the second structure (7) or an internal tool is applied to the third structure (8) in such a way that the tubular portion (2) shears off in the region of the set breaking point (3) during the action of a defined torque.

## Revendications

1. Ecrou fileté (10) permettant de limiter un couple appliqué, comprenant une partie filetée (1) et une partie tubulaire (2), un point d'amorce de rupture (3) étant aménagé entre la partie filetée (1) et la partie tubulaire (2), et la partie filetée (1) comportant une première structure d'entraînement (6) pour un premier outil, et la partie tubulaire (2) comportant une deuxième structure d'entraînement (7) pour un autre outil.

2. Ecrou fileté (10) selon la revendication 1, **caractérisé en ce que** le diamètre extérieur du point d'amorce de rupture (3) est à la fois plus petit que le diamètre extérieur de la partie filetée (1) et plus petit que le diamètre extérieur de la partie tubulaire (2).

3. Ecrou fileté (10) selon la revendications 1 ou 2, **caractérisé en ce que** la partie tubulaire (2) est réalisée en forme d'entonnoir de manière telle que, partant d'un diamètre extérieur ou diamètre nominal d'un filetage intérieur (5) de la partie filetée (1), elle s'élargisse en s'éloignant de cette dernière.

4. Ecrou fileté (10) selon la revendication 1 ou 2, **caractérisé en ce que** la partie tubulaire (2) est réalisée selon une forme cylindrique et présente un diamètre supérieur au diamètre extérieur ou diamètre nominal du filetage intérieur (5) de la partie filetée (1).

5. Ecrou fileté (10) selon la revendication 3 ou 4, **caractérisé en ce que** la partie tubulaire (2) comporte également un filetage intérieur, le diamètre extérieur ou diamètre nominal du filetage intérieur de la partie tubulaire (2) étant plus grand que le diamètre extérieur ou diamètre nominal du filetage intérieur (5) de la partie filetée (1).

6. Ecrou fileté (10) selon la revendication 4, **caractérisé en ce qu'**une troisième structure d'entraînement (8) pour un outil mâle est aménagée dans la partie tubulaire (2), par exemple sous forme d'une empreinte hexagonale creuse ou similaire.

7. Ecrou fileté (10) selon l'une des revendications 1 à 6, **caractérisé en ce que** les première et deuxième structures d'entraînement (6, 7) présentent à peu près les mêmes cotes.

8. Ecrou fileté (10) selon l'une des revendications 1 à 6, **caractérisé en ce que** les première et deuxième structures d'entraînement (6, 7) présentent des cotes différentes, décrivant notamment des polygones différents l'un de l'autre, non comparables.

9. Ecrou fileté (10) selon l'une des revendications précédentes, **caractérisé en ce que** l'écrou fileté (10) est réalisé en une matière plastique, notamment en un polymère tel que du polyamide.

10. Ecrou fileté (10) selon l'une des revendications précédentes, **caractérisé en ce que** le point d'amorce de rupture (3) est réalisé en une matière différente de celle de la partie filetée (1) et/ou de la partie tubulaire (2), notamment une matière plus molle.

11. Ecrou fileté (10) selon la revendication 9 ou 10, **caractérisé en ce que** la partie filetée (1), la partie tubulaire (2) et/ou le point d'amorce de rupture (3) sont joints les uns aux autres grâce à une technique de moulage par injection à deux composants.

12. Ecrou fileté (10) selon l'une des revendications précédentes, **caractérisé en ce que** le filetage intérieur (5) de la partie filetée (1) est réalisé sous forme d'un filetage (5) "en arêtes de poisson".

13. Ecrou fileté (10) selon la revendication 12, **caractérisé en ce que** le filetage (5) en "arêtes de poisson" est aménagé au moins partiellement jusque dans la zone de la partie tubulaire (2).

14. Ecrou fileté (10) selon la revendication 12 ou 13, **caractérisé en ce que** le filetage (5) en "arêtes de poisson" comprend au moins trois, de préférence quatre, et en particulier au moins cinq spires d'hélice.

15. Procédé de limitation d'un couple appliqué à un écrou fileté (10) selon l'une des revendications précédentes, et de desserrage de cet écrou fileté (10), dans lequel un outil extérieur est placé en prise avec la deuxième structure (7), ou un outil mâle est placé en prise dans la troisième structure (8), de manière telle que, sous l'application d'un couple défini, la partie tubulaire (2) soit cisaillée au niveau du point d'amorce de rupture (3), le desserrage étant effectué en plaçant un outil en prise avec la première structure d'entraînement (6) de la partie filetée (1).
